(19) **Europäisches Patentamt / European Patent Office / Office européen des brevets**

(11) **EP 3 336 206 A1**

(12) **EUROPEAN PATENT APPLICATION**
published in accordance with Art. 153(4) EPC

(43) Date of publication:
**20.06.2018 Bulletin 2018/25**

(21) Application number: **16835004.9**

(22) Date of filing: **29.07.2016**

(51) Int Cl.:
*C21D 9/00* (2006.01)   *B23P 13/00* (2006.01)
*C21D 1/10* (2006.01)   *C22C 38/00* (2006.01)
*C22C 38/06* (2006.01)   *C22C 38/60* (2006.01)

(86) International application number:
**PCT/JP2016/072426**

(87) International publication number:
**WO 2017/026307 (16.02.2017 Gazette 2017/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.08.2015 JP 2015158355**

(71) Applicant: **Nippon Steel & Sumitomo Metal
Corporation
Tokyo 100-8071 (JP)**

(72) Inventors:
• **IWASAKI, Tatsuya
  Tokyo 100-8071 (JP)**
• **WATARI, Koji
  Tokyo 100-8071 (JP)**

(74) Representative: **Vossius & Partner
Patentanwälte Rechtsanwälte mbB
Siebertstrasse 3
81675 München (DE)**

(54) **METHOD FOR MANUFACTURING PRODUCT MEMBER, AND PRODUCT MEMBER**

(57)    Provided are a product member having excellent wear resistance, bending fatigue strength, and machinability, whereby wear of a cutting tool during a manufacturing process can be suppressed, and a method for manufacturing the same. The present invention includes: a step for subjecting a rough member to induction hardening and annealing, and obtaining a hardened material, in which the frequency during high-frequency heating is set to 10 kHz to 300 kHz, the heating time during high-frequency heating is set to 1 second to 60 seconds, the annealing temperature is set to 160°C to 200°C, and the annealing time is set to 60 minutes to 180 minutes; and a step for subjecting the hardened material to cutting, and obtaining a product member, in which the rake angle of a cutting tool is set to more than -30° to -5° or less, a nose radius of the tool is set to 0.4 mm to 1.2 mm, a feed rate is set to more than 0.1 mm/rev to 0.4 mm/rev, the cutting speed is set to 50 m/minute to 150 m/minute, and the cut depth is set to 0.05 mm to 0.2 mm.

FIG. 1

**Description**

TECHNICAL FIELD

The present invention relates to a method for manufacturing a product member, more preferably a method for manufacturing a product member including induction hardening. Further, the present invention relates to a product member.

BACKGROUND ART

A product member used in an automobile or industrial machinery (for example, a machine structure part) is sometimes treated by types of surface hardening of induction hardening or carburizing and quenching.

As the method for manufacturing a product member which is hardened, for example the following method may be mentioned. That is, first, a crude member of a shape close to the final product is manufactured. Next, the manufactured crude member is machined to manufacture an intermediate member closer to the final product. Furthermore, finally, the intermediate member is successively hardened (by induction hardening or carburizing and quenching) and ground to obtain the product member.

Usually, a product member is required to exhibit excellent fatigue strength. Art for raising the fatigue strength is disclosed in PLT 1 to PLT 3.

PLT 1 discloses the art of shot peening a steel member to improve strength and further machining the extreme surface layer part. In PLT 1, due to this art, it is considered that the fatigue characteristics and the machinability of the shot peened parts are improved.

PLT 2 discloses the art of carburizing, quenching, and tempering a member to form a surface hardened layer, then grinding away the surface hardened layer. In PLT 2, due to this art, it is considered that the fatigue strength rises.

PLT 3 discloses the art of turning a metal member using a tool with a rake face tilted in the negative direction by 30 to 50° in range. In PLT 3, due to this art, it is considered that even without a process such as shot peening, it is possible to impart compressive residual stress and raise the fatigue strength.

CITATION LIST

PATENT LITERATURE

PLT 1. Japanese Patent Publication No. 3-120313A
PLT 2. Japanese Patent Publication No. 8-260125A
PLT 3. Japanese Patent Publication No. 2007-210070A

SUMMARY OF INVENTION

TECHNICAL PROBLEM

In this regard, recent product members have also been required to offer excellent wear resistance and bending fatigue strength. However, in the product members obtained by the arts disclosed in PLT 1 to PLT 3, the surface layers are unsuitable in structure. For this reason, it is sometimes difficult to achieve both wear resistance and fatigue strength. Furthermore, when considering the cost aspects, it is also desirable to suppress tool wear at the time of machining.

The present invention was made in consideration of the above situation and has as its object to provide a method for manufacturing a product member achieving both wear resistance and fatigue strength and able to suppress tool wear at the time of machining (excellent in machinability). Further, the present invention also has as its object to provide a product member having the above characteristics.

SOLUTION TO PROBLEM

The inventors studied in depth a method for manufacturing a product member achieving both wear resistance and fatigue strength and able to suppress tool wear at the time of machining and that product member. As a result, they learned that by machining a member after induction hardening and tempering, at the time of machining, the retained austenite transforms to hard work induced martensite and the product member is improved in wear resistance and fatigue strength. Further, they learned if transforming more of the retained austenite at the time of machining by work induced martensite transformation, the product member is improved much more in wear resistance and fatigue strength.

Usually, to control the transformation behavior to work induced martensite at the time of machining, it is effective to optimize the machining conditions. For this reason, the inventors experimented with optimization of machining conditions so as to increase the amount of transformation to martensite as much as possible. However, with just optimizing the machining conditions, while the wear resistance and fatigue strength were indeed improved, the targeted values failed to be reached.

Therefore, the inventors focused also on factors not related to the machining conditions at all such as the chemical components of the steel material and the heat treatment conditions to try to make further improvements in the wear resistance and fatigue strength. As a result, they learned that by employing specific steel material components and heat treatment conditions, work induced martensite transformation more easily occurs at the time of machining and a product member is remarkably improved in wear resistance and fatigue strength.

In the past, to control the amount of retained austenite, the general practice has been to employ chemical components and heat treatment conditions of a specific steel material. However, controlling not only the amount of retained austenite but also the behavior of work induced martensite transformation at the time of machining, which at first glance has no relationship with the amount of retained austenite, by optimizing the chemical components of the steel material and the heat treatment conditions is a novel technical idea which has not been implemented up to now.

Furthermore, the inventors engaged in further intensive study on suppression of tool wear at the time of machining and in particular discovered the optimum machining conditions by adjusting the chemical components of the steel material and the heat treatment conditions.

Due to the above, the inventors obtained the discovery that to improve all of the wear resistance, fatigue strength, and tool wear with a good balance, rather than individually optimizing the chemical components of the steel material, heat treatment conditions, and machining conditions, it is desirable to organically optimize these conditions linked together.

Further, the inventors obtained the discovery that by organically optimizing the chemical components of the steel material, the heat treatment conditions, and the machining conditions, the structure after induction hardening and the structure after machining are suitably controlled and in turn a product member with a wear resistance, fatigue strength, and machinability improved with a good balance is obtained. Based on the above discovery, the inventors completed the invention. The gist is as follows:

[1] A method for manufacturing a product member comprising:

a step of working a steel material having a chemical composition containing C: 0.4 to 0.7%, Si: 0.25% or less, Mn: 0.5 to 2.6%, P: 0.050% or less, S: 0.005 to 0.020%, Al: 0.010 to 0.050%, N: 0.005 to 0.025%, and O: 0.003% or less, having a balance of Fe and unavoidable impurities, and satisfying formula (3) to obtain a crude member,
a step of induction hardening and tempering the crude member to obtain a hardened member, in which step, a frequency at the time of induction heating is made 10 kHz to 300 kHz, a heating time at the time of induction heating is made 1 second to 60 seconds, a tempering temperature is made 160°C to 200°C, and a tempering time is made 60 minutes to 180 minutes and,
in the hardened member, a structure at a reference position corresponding to a position of 20 $\mu$m depth from a position corresponding to the surface of the final form of the product member becomes a structure containing martensite and a volume fraction of 8 to 20% of retained austenite, and
a step of machining the hardened member to obtain a product member, in which step, in which step a rake angle of a machining tool is made over -30° to -5°, a nose radius of the tool is made 0.4 mm to 1.2 mm, a feed is made over 0.1 mm/rev to 0.4 mm/rev, a machining speed is made 50 m/min to 150 m/min, and a depth of cut is made 0.05 mm to 0.2 mm and,
in the structure at a reference position, a retained austenite volume fraction becomes 12% or less, and a rate of decrease of retained austenite $\Delta\gamma$ found by formula (A) from a retained austenite volume fraction (RI) before machining and retained austenite volume fraction (RF) after machining becomes 40% or more:

$$17.0 \leq 25.9C + 6.35Mn \leq 27.2 \ (1)$$

where, for the element symbols in formula (1), the contents (mass%) of the elements are entered.

$$\Delta\gamma = (RI - RF)/RI \times 100 \ (A)$$

[2] The method for manufacturing a product member according to the above [1], wherein the steel material contains, in place of part of the Fe, Pb: 0.5% or less.

[3] The method for manufacturing a product member according to the above [1] or [2], wherein the steel material contains, in place of part of the Fe, one or more elements selected from the group comprising V and Ti in a total content of 0.1% or less.

[4] The method for manufacturing a product member according to any one of the above [1] to [3], wherein the steel material contains, in place of part of the Fe, one or more elements selected from the group comprising Cr: 3.0% or less, Mo: 3.0% or less, and Ni: 3.0% or less and satisfies formula (2), instead of formula (1):

$$17.0 \leq 25.9C + 6.35Mn + 2.88Cr + 3.09Mo + 2.73Ni \leq 27.2 \quad (2)$$

where, for the element symbols in formula (2), the contents (mass%) of the elements are entered.

[5] The method for manufacturing a product member according to any one of the above [1] to [4] further comprising using a CBN tool for machining.

[6] A product member having a chemical composition containing, by mass%, C: 0.4 to 0.7%, Si: 0.25% or less, Mn: 0.5 to 2.6%, P: 0.050% or less, S: 0.005 to 0.020%, Al: 0.010 to 0.050%, N: 0.005 to 0.025%, and O: 0.003% or less, having a balance of Fe and unavoidable impurities, and satisfying formula (3), wherein

a structure at a position of 20 $\mu$m depth from the surface has a total of martensite and retained austenite of 97% or more,

a maximum retained austenite volume fraction (R1) in the range from the surface to 200 $\mu$m depth is 8 to 20%,

a predicted rate of decrease of retained austenite $\Delta\gamma$p found by formula (B) from a retained austenite volume fraction (R2) at a position of 20 $\mu$m depth from the surface and the maximum retained austenite volume fraction (R1) is 40% or more, and

the surface has a thickness 1 to 15 $\mu$m plastic flow structure:

$$17.0 \leq 25.9C + 6.35Mn \leq 27.2 \quad (3)$$

where, for the element symbols in formula (3), the contents (mass%) of the elements are entered.

$$\Delta\gamma p = (R1 - R2)/R1 \times 100 \quad (B)$$

[7] The product member according to the above [6] which contains, in place of part of the Fe, Pb: 0.5% or less.

[8] The product member according to the above [6] or [7] which contains, in place of part of the Fe, one or more elements selected from the group comprised of V and Ti in a total content of 0.1% or less.

[9] The product member according to any of the above [6] to [8] which contains, in place of part of the Fe, at least one element selected from the group comprised of Cr: 3.0% or less, Mo: 3.0% or less, and Ni: 3.0% or less and which satisfies formula (4) instead of formula (3):

$$17.0 \leq 25.9C + 6.35Mn + 2.88Cr + 3.09Mo + 2.73Ni \leq 27.2 \quad (4)$$

where, for the element symbols in formula (4), the contents (mass%) of the elements are entered.

[10] The product member according to any one of the above [6] to [9] which is obtained by induction hardening, tempering, and machining the steel material.

ADVANTAGEOUS EFFECTS OF INVENTION

The method for manufacturing a product member according to the present invention is predicated on adjusting the chemical composition of the crude member forming the starting material of the product member and, in particular, makes improvements to the structure of the steel material after hardening and the structure of the product member after machining. As a result, according to the method for manufacturing a product member according to the present invention, a product member excellent in wear resistance, bending fatigue strength, and machinability can be obtained.

BRIEF DESCRIPTION OF DRAWINGS

[FIG. 1] FIG. 1 is a scan electron micrograph of a plane vertical to an axial direction of a product member.
[FIG. 2] FIG. 2 is a side view of a wear test piece used for a two cylinder wear test.
[FIG. 3] FIG. 3 is a side view of a fatigue test used for an Ono type rotating bending fatigue test.
[FIG. 4] FIG. 4 is a front view showing a two cylinder wear test method.

DESCRIPTION OF EMBODIMENTS

Below, referring to the drawings, modes of working the present invention (below, sometimes referred to as "embodiments") will be explained in detail. These embodiments do not limit the present invention. Further, the components of the embodiments include ones which a person skilled in the art could substitute easily or ones substantially the same. Furthermore, the various forms included in the embodiments can be freely combined within a range self evident to a person skilled in the art. Note that, in the figures, the same or corresponding members are assigned the same reference notations and explanations are not repeated.

Method for Manufacturing Product Member

The method for manufacturing a product member of the present embodiment includes a step of working a steel material to obtain a crude member (crude member manufacturing step), a step of treating the crude member by induction hardening and tempering to obtain a hardened member (hardened member manufacturing step), and a step of machining the hardened member to obtain a product member (product member manufacturing step).

Crude Member Manufacturing Step

In the present step, a crude member having a desired shape close to the shape of the product member is manufactured. First, a steel material is prepared.

Chemical Composition of Steel Material (Essential Requirement)

The steel material has the following chemical composition. Note that, the ratios (%) of the elements shown below all mean mass%.

C: 0.4 to 0.7%

Carbon (C) raises the strength of the product member (in particular, the strength of the core part). C further generates retained austenite or raises the wear resistance and bending fatigue strength. If the C content is too low, this effect is not obtained. On the other hand, if the C content is too high, the steel material becomes too high in strength. For this reason, the steel material falls in machinability. Furthermore, the strain generated at the time of induction hardening becomes large and quenching cracks are caused. Therefore, the C content is 0.4 to 0.7%. The preferable lower limit of the C content is 0.5% or more. The preferable upper limit of the C content is less than 0.65%.

Si: 0.25% or less

Silicon (Si) reacts with the tool to cause adhesive wear at the time of machining after induction hardening and tempering. For this reason, Si causes an increase in the tool wear. Therefore, the Si content is 0.25% or less. The preferable upper limit of the Si content is 0.15%.

Mn: 0.5 to 2.6%

Manganese (Mn) raises the hardenability of steel and makes the retained austenite in the steel increase. Austenite containing Mn transforms to work induced martensite more easily at the time of machining after induction hardening and tempering compared with austenite not containing Mn. As a result, the product member is raised in wear resistance and bending fatigue strength. If the Mn content is too low, this effect is not obtained. On the other hand, if the Mn content is too high, the retained austenite after induction hardening and tempering becomes excessively great. For this reason, sufficient work induced martensite transformation is not caused at the time of machining, retained austenite becomes excessive even after machining, and in turn sufficient work induced martensite transformation is not caused at the time of machining and retained austenite is difficult to reduce even after machining. As a result, after machining, the product member falls in wear resistance and bending fatigue strength. Therefore, the Mn content is 0.5 to 2.6%. The preferable lower limit of the Mn content is 0.8%, more preferably 1.4%. The preferable upper limit of the Mn content is 2.0%.

P: 0.050% or less

Phosphorus (P) is an impurity. P segregates at the grain boundary and causes the steel to become brittle. Therefore, the P content is 0.050% or less. The preferable upper limit of the P content is 0.030%. The P content may be made as low as possible.

S: 0.005 to 0.020%

Sulfur (S) bonds with Mn to form MnS and raises the machinability. If the S content is too low, this effect is not obtained. On the other hand, if the S content is too high, it forms coarse MnS and the steel falls in hot workability, cold workability, wear resistance, and bending fatigue strength. Therefore, the S content is 0.005 to 0.020%. The preferable lower limit of the S content is 0.008%. The preferable upper limit of the S content is 0.015%.

Al: 0.010 to 0.050%

Aluminum (Al) deoxidizes steel. Al further bonds with N to form AlN and refine the crystal grains. As a result, the steel rises in strength. If the Al content is too low, this effect is not obtained. On the other hand, if the Al content is too high, hard, coarse $Al_2O_3$ is formed and the steel falls in machinability and, furthermore, falls in wear resistance and bending fatigue strength. Therefore, the Al content is 0.010 to 0.050%. The preferable lower limit of the Al content is 0.020%. The preferable upper limit of the Al content is 0.040%.

N: 0.005 to 0.025%

Nitrogen (N) forms nitrides to refine the crystal grains and raise the bending fatigue strength of the steel. If the N content is too low, this effect is not obtained. On the other hand, if the N content is too high, coarse nitrides are formed and the steel falls in toughness. Therefore, the N content is 0.005 to 0025%. The preferable lower limit of the N content is 0.010%. The preferable upper limit of the N content is 0.020%.

O: 0.003% or less

Oxygen (O) is an impurity. O bonds with Al to form hard oxide-based inclusions. Oxide-based inclusions cause steel to fall in machinability and cause it to fall in wear resistance and bending fatigue strength as well. Therefore, the O content is 0.003% or less. The O content may be made as low as possible.
The balance of the chemical composition of the steel material is Fe and unavoidable impurities. The "unavoidable impurities" means components which enter from the ore or scrap utilized as raw materials of the steel or the environment of the manufacturing process etc. and which are not intentionally included in the steel material.

Relationship of Contents of Elements (Essential Requirement)

The relationship of the contents of the elements forming the steel material satisfies formula (5) shown below:

$$17.0 \leq 25.9C+6.35Mn \leq 27.2 \ (5)$$

where, for the element symbols in formula (5), the contents (mass%) of the corresponding elements are entered.

Regarding Formula (5)

F1 is defined as 25.9C+6.35Mn. F1 is a parameter showing the stability of austenite. If the F1 is too low, after induction hardening and tempering, retained austenite is not sufficiently formed and the product member falls in wear resistance and bending fatigue strength. On the other hand, if the F1 is too high, the retained austenite after induction hardening and tempering becomes excessively large. In this case, work induced martensite transformation becomes difficult at the time of machining after tempering. For this reason, the product member falls in wear resistance and bending fatigue strength. Therefore, the F1 is 17.0 to 27.2. The preferable lower limit of the F1 is 17.1, while the preferable upper limit is 27.0 or less.

Chemical Composition of Steel Material (Optional Requirement)

The steel material may further contain Pb in place of part of the Fe.

Pb: 0.5% or less

Lead (Pb) is an optional element and need not be included. If included, a drop in the tool wear and improvement of the chip disposability are realized. However, if the Pb content is too high, the steel falls in strength and toughness and falls in wear resistance and bending fatigue strength as well. Therefore, the Pb content is preferably made 0.5% or less. The more preferable upper limit of the Pb content is 0.4%. Note that, to obtain the above-mentioned effect, the Pb content is preferably made 0.03% or more.

The steel material may further contain one or more elements selected from the group comprised of V and Ti in place of part of the Fe.

V and Ti: Total Content of 0.1% or less

Vanadium (V) and titanium (Ti) are optional elements and need not be included. These elements bond with C and N to form precipitates. The precipitates of these elements complement the refinement of crystal grains at the hardened parts due to AlN. The precipitates of these elements raise the wear resistance of the product member. However, if the total content of these elements exceeds 0.1%, the precipitates coarsen and the bending fatigue strength and machinability fall. Therefore, the total content of V and Ti is preferably 0.1% or less. If one or more of V and Ti are included as optional elements, the above effect is obtained. The more preferable upper limit of the total content of V and Ti is 0.08%. The preferable lower limit of the total content of V and Ti is 0.01%.

The steel material may further include, in place of part of the Fe, one or more elements selected from the group comprised of Cr, Mo, and Ni. These elements all raise the hardenability of the steel and make the retained austenite increase.

Cr: 3.0% or less

Chromium (Cr) is an optional element and need not be included. Cr raises the hardenability of the steel and further makes the retained austenite increase. However, if the Cr content is too high, the retained austenite after induction hardening and tempering becomes excessively high. In this case, sufficient work induced martensite transformation does not occur at the time of machining and the retained austenite is hard to decrease even after machining. As a result, the product member falls in wear resistance and bending fatigue strength. Therefore, the Cr content is preferably 3.0% or less. The more preferable lower limit of the Cr content is 0.1%. The preferable upper limit of the Cr content is 2.0%.

Mo: 3.0% or less

Molybdenum (Mo) is an optional element and need not be included. If included, Mo raises the hardenability of the steel and further makes the retained austenite increase. Mo further raises the tempering softening resistance and raises the wear resistance and bending fatigue strength. However, if the Mo content is too high, the retained austenite after induction hardening and tempering will become excessive. In this case, sufficient work induced martensite transformation does not occur at the time of machining. As a result, the product member falls in wear resistance and bending fatigue strength. Therefore, the Mo content is preferably made 3.0% or less. The more preferable upper limit of the Mo content is 2.0%. The preferable lower limit of Mo content is 0.1%.

Ni: 3.0% or less

Nickel (Ni) is an optional element and need not be included. If included, Ni raises the hardenability of the steel and further makes the retained austenite increase. Ni further raises the toughness of the steel. However, if the Ni content is too high, the retained austenite after induction hardening and tempering will become excessive. In this case, sufficient work induced martensite transformation does not occur at the time of machining after tempering. As a result, the product member falls in wear resistance and bending fatigue strength. Therefore, the Ni content is preferably 3.0% or less. The more preferable upper limit of the Ni content is 2.0%. The preferable lower limit of the Ni content 0. 1%.

Relationship of Contents of Elements (Optional Requirement)

If the steel material contains one of more elements of the group comprised of Cr, Mo, and Ni, the chemical composition of the steel material preferably satisfies formula (6) instead of formula (5):

$$17.0 \leq 25.9C+6.35Mn+2.88Cr+3.09Mo+2.73Ni \leq 27.2 \text{ (6)}$$

where, for the element symbols in formula (6), the contents (mass%) of the corresponding elements are entered.

Regarding formula (6)

F2 is defined as 25.9C+6.35Mn+2.88Cr+3.09Mo+2.73Ni. The F2 is a parameter showing the stability of austenite. The F2 is the F1 to which the item of Cr, the item of Mo, and the item of Ni are added. In the same way as the F1, both if the F2 is too low or too high, the product member falls in wear resistance and bending fatigue strength. Therefore, the F2 is 17.0 to 27.2. The preferable lower limit of the F2 is 17.1, while the preferable upper limit is 27.0 or less.

Manufacture of Crude Member

The steel material having the above chemical composition is worked to obtain a crude member. For the working method, a known method may be employed. As the working method, for example, hot working, cold working, machining, etc. may be mentioned. The crude member is made a shape close to the product member.

Manufacturing Process of Hardened Member

The thus obtained crude member is treated for induction hardening and treated for tempering to obtain a hardened member. Due to this, in the hardened member, the structure at a reference position corresponding to the position of 20 μm depth from the position corresponding to the surface of the final form of the product member is made martensite and a volume fraction of 8 to 20% of retained austenite.

Induction Hardening Treatment

The induction hardening treatment comprises, first, (i) induction heating and then (ii) hardening. The induction heating and hardening are performed under the following conditions:

(i) Induction Heating

Frequency at time of induction heating: 10 to 300 kHz

If the frequency is too low, the heated range becomes enlarged. For this reason, the strain at the time of hardening becomes greater. On the other hand, if the frequency is too high, the heated range concentrates at only the surface layer. In this case, the hardened layer becomes thin and the wear resistance falls. Therefore, the frequency at the time of induction heating is 10 to 300 kHz.

Heating Time at Time of Induction Heating: 1.0 to 60 sec

The "heating time" is the time from the start of heating of the crude member to the start of water cooling. If the heating time at the time of induction heating is too long, the austenite grains become coarser and the wear resistance falls. On the other hand, if the heating time is too short, cementite does not sufficiently dissolve into a solid solution. For this reason, after induction hardening and tempering, a structure comprising martensite and a volume fraction of 8 to 20% of retained austenite is not obtained. Therefore, the heating time of the crude member at the time of induction heating is 1.0 to 60 sec.

(ii) Hardening

After holding at a constant temperature, a known method is used for hardening. The hardening can, for example, be made water hardening.

Tempering Treatment

After treatment for induction hardening, treatment is performed for tempering. If performing treatment for tempering, the product member rises in toughness. Furthermore, C disperses and forms the precursors of carbides, so the retained austenite becomes unstable, work induced martensite transformation easily occurs at the time of machining, and the wear resistance and bending fatigue strength are improved. The tempering treatment is performed under the following conditions:

Tempering Temperature (T1): 160 to 200°C

If the tempering temperature T1 is too low, the above effect due to tempering is not obtained. On the other hand, if the tempering temperature is too high, the retained austenite becomes remarkably unstable and the retained austenite breaks down during tempering. Furthermore, the austenite remaining without breaking down stabilizes as it is released from heat treatment strain, so sufficient work induced martensite transformation does not occur at the time of machining and does not contribute to the improvement of the wear resistance and bending fatigue strength. Therefore, the tempering temperature T1 is 160 to 200°C.

Tempering Time (t1): 60 to 180 minutes

If the tempering time t1 is too short, the above effect of tempering is not obtained. On the other hand, if the tempering time t1 is too long, the retained austenite becomes remarkably unstable and the retained austenite breaks down during tempering. Furthermore, the austenite remaining without breaking down stabilizes as it is released from heat treatment strain, so sufficient work induced martensite transformation does not occur at the time of machining and does not contribute to the improvement of the wear resistance and bending fatigue strength. Therefore, the tempering time t1 is 60 to 180 minutes.

Structure of Hardened Member After End of Process for Manufacturing Hardened Member

In the hardened member obtained by treatment for induction hardening and treatment for tempering under the above-mentioned conditions, the structure at a reference position corresponding to the position of 20 $\mu$m depth from the position corresponding to the surface of the final form of the product member (below, sometimes referred to simply as the "final surface position") contains martensite and a volume fraction of 8 to 20% of retained austenite. Here, "the position corresponding to the surface of the final form of the product member" means the position minus the amount of depth of cut (thickness direction dimension) set at the time of the later mentioned machining (process for manufacturing product member) from the surface of the hardened member.

Note that, the structure at the reference position at the hardened member is observed by the following method. That is, at the hardened member, a test piece containing a reference position of a position of a depth of 20 $\mu$m from the position corresponding to the surface of the final form of the product member is prepared. This test piece is corroded by a 5% Nital solution. The corroded surface is observed in three fields by a power 1000X optical microscope. At this time, the reference position is made the center of the field. The area rate of each field is found by the usual image analysis method in a plane of a range of 20 $\mu$m$\times$100 $\mu$m of 10 $\mu$m to the surface direction of the hardened member from the center of the field, 10 $\mu$m in the direction opposite to the surface of the hardened member from the center of the field, and 50 $\mu$m in both directions vertical to the surface direction of the hardened member from the center of the field. The area rate of each phase obtained is defined as the volume fraction of the phase.

In observation of the structure by an optical microscope, the retained austenite is contained in the martensite. That is, with an optical microscope, martensite and retained austenite cannot be differentiated. Therefore, the volume fraction (RI) of the retained austenite in the hardened member is measured by the following method. At the hardened member, a sample containing a reference position at a depth of a position 20 $\mu$m from the position corresponding to the surface of the final form of the product member is taken. The surface including the reference position is electrolytically polished. An electrolytic solution containing 11.6% of ammonium chloride, 35.1% of glycerin, and 53.3% of water is prepared. This electrolytic solution is used to electrolytically polish the surface including the reference position by a voltage of 20V.

The electrolytically polished surface is analyzed by the X-ray diffraction method. For X-ray diffraction, a product name RINT-2500HL/PC made by Rigaku is used. For the light source, a Cr tube is used. The volume fraction (RI) of the retained austenite is measured based on the integrated intensity ratio of the diffraction peaks of the (221) face of the bcc structure and the (220) face of the fcc structure obtained by X-ray diffraction.

The volume fraction of the retained austenite at a reference position after the process for manufacturing the hardened member is 8 to 20%. The retained austenite is transformed to work induced martensite at the time of machining after induction hardening and tempering. Due to this, the product member rises in wear resistance and bending fatigue strength. If the volume fraction of the retained austenite at the reference position is too low, this effect is not obtained. On the other hand, if the volume fraction of the retained austenite at the reference position is too high, a large amount of austenite remains even after machining. In this case, no improvement of the wear resistance and bending fatigue strength of the product member can be expected.

Process of Manufacturing Product Member (Machining)

After being treated by induction hardening and treated by tempering, the member is machined. Due to the machining, the member is finished to the shape of the product member while causing work induced martensite transformation. Due to this, the product member is improved in wear resistance and bending fatigue strength. The machining is performed under the following conditions. Note that, as the machining tool, for example, a CBN tool may be used. Using a CBN tool is effective from the viewpoint of suppressing tool wear.

Rake Angle $\alpha$ of Machining Tool: $-30°<\alpha\leq-5°$

If the rake angle $\alpha$ is larger than -5°, work induced martensite transformation does not sufficiently occur during machining. For this reason, the product member falls in wear resistance and bending fatigue strength. On the other hand, if the rake angle is -30° or less, the machining resistance becomes too large, the machinability falls, the tool wear increases, and sometimes the tool breaks. Therefore, the rake angle $\alpha$ is $-30°<\alpha\leq-5°$. Preferably, the rake angle $\alpha$ is $-25°<\alpha\leq-15°$.

Nose radius "r" of Tool: 0.4 to 1.2 mm

If the nose radius "r" of the tool is too small, the surface roughness becomes too large and the product member falls in wear resistance and bending fatigue strength. If the surface roughness becomes larger, the member must be polished by finish polishing to reduce the surface roughness. On the other hand, if the nose radius "r" of the tool is too large, the machining resistance becomes larger, so the machinability falls and the tool wear increases. Therefore, the nose radius "r" of the tool is 0.4 to 1.2 mm.

Feed "f": Over 0.1 mm/rev (Revolutions) to 0.4 mm/rev

If the feed "f" is too small, the machining resistance, that is, the force by which the tool is pressed against the machined member, is too small. In this case, sufficient work induced martensite transformation does not occur. For this reason, the product member falls in wear resistance and bending fatigue strength. On the other hand, if the feed is too large, the machining resistance becomes larger. In this case, the tool wear becomes larger and the machinability falls. Therefore, the feed "f" is over 0.1 mm/rev to 0.4 mm/rev. The preferable lower limit of the feed "f" is 0.2 mm/rev.

Machining Speed "v": 50 to 150 m/min

If the machining speed "v" is too large, the machining temperature rises and adhesive wear occurs. In this case, the tool wear increases and the machinability falls. On the other hand, if the machining speed is too small, the machining ability falls and the manufacturing efficiency falls. Therefore, the machining speed "v" is 50 to 150 m/min.

Depth of Cut "d": 0.05 to 0.2 mm

If the depth of cut "d" is too small, the machining resistance becomes smaller. In this case, a sufficient work induced martensite transformation does not occur. For this reason, the product member falls in wear resistance and bending fatigue strength. On the other hand, if the depth of cut "d" is too large, the machining resistance becomes larger. In this case, the tool wear becomes larger and the machinability falls. Therefore, the depth of cut "d" is 0.05 to 0.2 mm. The preferable lower limit of the depth of cut "d" is 0.08 mm, while the preferable upper limit is 0.15 mm.

Structure of Product Member

A product member is obtained by the machining shown above. At the above reference position of the product member, the volume fraction of the retained austenite is 12% or less. The rate of decrease of volume of the retained austenite before and after machining is 40% or more.

The volume fraction (RF) of the retained austenite of the product member after machining is also measured by a method similar to the retained austenite volume fraction (RI) of the above-mentioned hardened member. In the product member as well, a sample having a surface including a reference position is taken. This sample is electrolytically polished in the same way as the electrolytic polishing performed on the hardened member. The electrolytically polished sample is analyzed by X-ray diffraction and measured for volume fraction (RF) of retained austenite.

The rate of decrease of retained austenite Δγ before and after machining is found based on the found volume fractions (RI) and (RF) from formula (C):

$$\text{Rate of decrease } \Delta\gamma=(RI-RF)/RI\times100 \ (C)$$

The volume fraction of retained austenite at a reference position of the product member is 12% or less. If the volume fraction of retained austenite after machining is too high, hard martensite is not obtained and the product member falls in wear resistance and bending fatigue strength.

The rate of decrease of retained austenite Δγ before and after machining is 40% or more. Due to the machining, the retained austenite undergoes work induced martensite transformation, whereby the wear resistance and bending fatigue strength rise. If the rate of decrease of volume Δγ is low, this effect cannot be sufficiently obtained.

Product Member

The product member of the present embodiment has a chemical composition containing the above-mentioned components and satisfying the above formula (5) or (6), has a structure at a position 20 $\mu$m depth from the surface comprised of martensite and retained austenite, has a maximum retained austenite volume fraction (R1) in a range from the surface down to 200 $\mu$m depth of 8 to 20%, has a predicted rate of decrease of retained austenite Δγp found from the retained austenite volume fraction (R2) at a position 20 $\mu$m depth from the surface and the maximum retained austenite volume fraction (R1) by the formula (D) of 40% or more, and has a thickness 1 to 15 $\mu$m plastic flow structure at the surface. Here, the maximum retained austenite volume fraction R1 means the maximum value in the retained austenite volume fractions measured from the surface of the product member to 200 $\mu$m depth at 10 $\mu$m pitch.

$$\Delta\gamma p=(R1-R2)/R1\times100 \ (D)$$

Structure at Position of 20 $\mu$m Depth From Surface

If there is ferrite, pearlite, or other low strength phase as the structure at a position 20 $\mu$m depth from the surface of the product member, fractures easily form starting from these phases and the product member becomes lower in wear resistance and bending fatigue strength. Therefore, the volume fraction of the total of the martensite and retained austenite is limited to 97% or more. Note that, the preferable range of the volume fraction is 99% or more.

Maximum Retained austenite Volume Fraction (R1) in Range From Surface to 200 $\mu$m Depth

Retained austenite undergoes work induced martensite transformation at the time of finishing the product member. As a result, the product member rises in strength and rises in wear resistance and bending fatigue strength. To obtain such an effect, the maximum retained austenite volume fraction (R1) must be 8% or more.

On the other hand, retained austenite is soft, so if (R1) exceeds 20%. Conversely the product member falls in strength.

Predicted Rate of Decrease of Retained austenite Δγp Found From Retained austenite Volume Fraction (R2) at Position of 200 $\mu$m Depth From Surface and Above Maximum Retained austenite Volume Fraction (R1)

The maximum retained austenite volume fraction (R1) in the range from the surface down to 200 $\mu$m depth is 8 to 20%. The predicted rate of decrease of retained austenite (Δγp) found from the retained austenite volume fraction (R2) at a position 20 $\mu$m depth from the surface and the maximum retained austenite volume fraction (R1) by the above formula (D) is 40% or more. Here, the retained austenite volume fraction (R2) at a position 20 $\mu$m depth from the surface is the retained austenite volume fraction (RF) (explained in the section on the method for manufacturing a product member). Further, the predicted rate of decrease of retained austenite (Δγp) found from the maximum retained austenite volume fraction (R1) by the above formula (D) is a value similar to the above-mentioned Δγ (explained in the section on the method for manufacturing a product member). Both express the extent of work induced transformation of the austenite at the time of machining in the process for manufacturing a product member. Therefore, the larger the Δγ, the larger Δγp becomes.

The predicted rate of decrease of retained austenite (Δγp) expresses the extent of work induced martensite transformation at the time of machining. If Δγp is large, it means that a larger amount of work induced martensite transformation has occurred at the time of machining and therefore the wear resistance and bending fatigue strength are improved. To obtain such an effect, $\Delta\gamma p$ has to be 40% or more. Note that, the preferable value of $\Delta\gamma p$ is 42% or more.

Thickness of Plastic Flow Structure at Surface: 1 to 15 $\mu$m

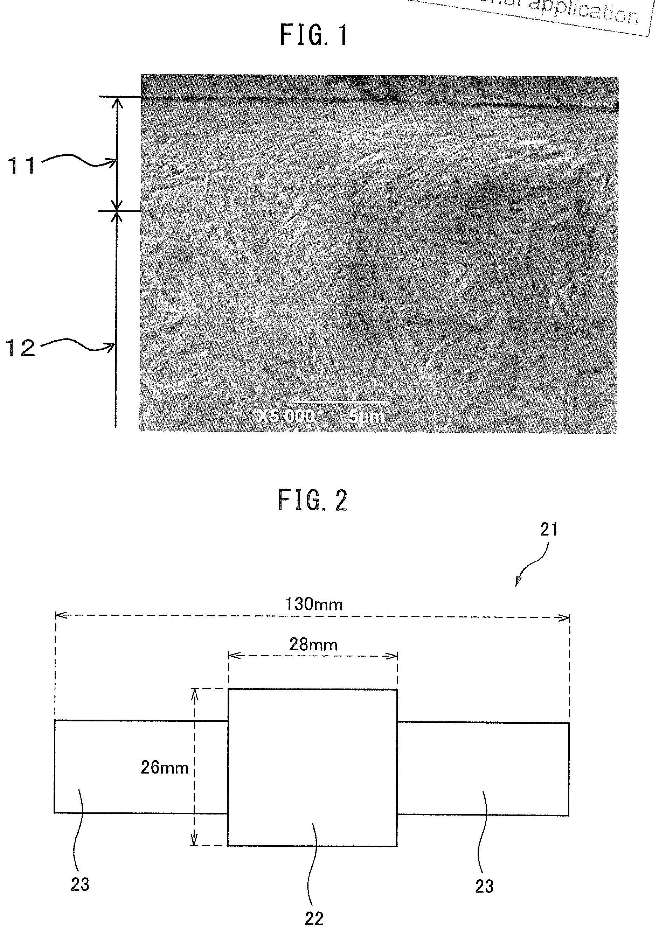

The thickness of the plastic flow structure of the surface of the product member is measured by the following method. A test piece is taken so as to include the surface of the product member and so that the plane (cross-section) vertical to the axial direction of the product member (for example, in the case of a dumbbell shaped test piece, its longitudinal direction) becomes the observed surface. The test piece, polished to a mirror finish, is corroded by a 5% Nital solution. The corroded surface is observed by a 5000X scan type electron microscope (SEM). An example of the obtained SEM image is shown in FIG. 1. In the same figure, the plastic flow structure 11 is a part where the structure is curved in the circumferential direction of the product member (left direction to right direction of paper surface in FIG. 1) with respect to the center part 12. The distance from the surface of the product member to the end of the curved structure is defined as the thickness of the plastic flow structure 11.

At the time of machining, a large deformation occurs in the surface layer part of the hardened member, so a plastic flow structure is formed. This plastic flow structure is hard. If the thickness becomes 1 $\mu$m or more, the product member is improved in wear resistance and bending fatigue strength. However, the plastic flow structure is fragile, so if the thickness is thin, a certain extent of deformation is possible, but if the thickness is over 15 $\mu$m, cracking occurs and form starting points of formation of fractures, so the wear resistance and bending fatigue strength conversely fall. Furthermore, if the thickness of the plastic flow structure exceeds 15 $\mu$m, the machinability falls. At the time of machining, the load on the tool becomes greater and the tool life is remarkably lowered. Due to the above, the thickness of the plastic flow structure of the surface layer of the product member was limited to 1 to 15 $\mu$m. Note that, to make the product member further better in wear resistance and bending fatigue strength, the thickness of the plastic flow structure of the surface layer of the product member is preferably made 2 $\mu$m or more, more preferably is made 4 $\mu$m or more.

EXAMPLES

A vacuum melting furnace was used to obtain molten steels A to S having the chemical compositions shown in Table 1.

Table 1

| Steel type | Chemical com composition (units: mass%, balance of Fe and impurities) | | | | | | | | | | | | | | F1 or F2 |
|---|---|---|---|---|---|---|---|---|---|---|---|---|---|---|---|
| | C | Si | Mn | P | S | Al | N | O | Pb | V | Ti | Cr | Mo | Ni | |
| A | 0.55 | 0.11 | 1.59 | 0.010 | 0.009 | 0.032 | 0.015 | 0.002 | - | - | - | - | - | - | 24.3 |
| B | 0.41 | 0.10 | 1.60 | 0.013 | 0.010 | 0.033 | 0.013 | 0.003 | - | - | - | - | - | - | 20.8 |
| C | 0.70 | 0.09 | 0.80 | 0.012 | 0.010 | 0.032 | 0.015 | 0.003 | - | - | - | - | - | - | 23.2 |
| *D | *0.30 | 0.10 | 1.60 | 0.011 | 0.011 | 0.032 | 0.014 | 0.002 | - | - | - | - | - | - | 17.9 |
| E | 0.55 | 0.12 | 2.00 | 0.012 | 0.011 | 0.033 | 0.015 | 0.002 | - | - | - | - | - | - | 26.9 |
| *F | 0.60 | 0.11 | *0.40 | 0.015 | 0.010 | 0.031 | 0.012 | 0.003 | - | - | - | - | - | - | 18.1 |
| *G | 0.51 | 0.15 | *2.81 | 0.013 | 0.012 | 0.032 | 0.011 | 0.002 | - | - | - | - | - | - | *31.1 |
| *H | 0.44 | 0.14 | 0.79 | 0.014 | 0.011 | 0.033 | 0.012 | 0.003 | - | - | - | - | - | - | *16.4 |
| *I | 0.54 | *0.81 | 1.59 | 0.015 | 0.011 | 0.032 | 0.011 | 0.002 | - | - | - | - | - | - | 19.1 |
| J | 0.56 | 0.09 | 1.20 | 0.013 | 0.010 | 0.033 | 0.014 | 0.003 | - | - | - | 0.80 | 0.20 | 0.50 | 25.1 |
| *K | 0.55 | 0.10 | 1.20 | 0.015 | 0.010 | 0.032 | 0.013 | 0.003 | - | - | - | 1.21 | 1.00 | 1.01 | *31.2 |
| L | 0.56 | 0.11 | 0.80 | 0.013 | 0.010 | 0.033 | 0.015 | 0.003 | - | - | - | 2.00 | - | - | 25.3 |
| M | 0.55 | 0.10 | 0.79 | 0.013 | 0.009 | 0.032 | 0.014 | 0.003 | - | - | - | - | 2.01 | - | 25.4 |
| N | 0.55 | 0.11 | 0.80 | 0.014 | 0.010 | 0.031 | 0.014 | 0.002 | - | - | - | - | - | 2.00 | 24.8 |
| O | 0.56 | 0.10 | 0.59 | 0.013 | 0.009 | 0.031 | 0.014 | 0.003 | - | 0.05 | - | - | - | - | 24.6 |
| P | 0.55 | 0.09 | 1.60 | 0.015 | 0.009 | 0.033 | 0.013 | 0.003 | - | - | 0.10 | - | - | - | 24.4 |
| *Q | 0.54 | 0.10 | 1.60 | 0.013 | 0.011 | 0.033 | 0.014 | 0.002 | - | 0.10 | 0.10 | - | - | - | 24.1 |
| R | 0.54 | 0.10 | 1.61 | 0.013 | 0.010 | 0.032 | 0.015 | 0.002 | 0.30 | - | - | - | - | - | 24.2 |
| *S | 0.55 | *0.34 | 1.59 | 0.014 | 0.010 | 0.033 | 0.015 | 0.003 | - | - | - | - | - | - | 24.3 |

Molten steels of various steel types were used to obtain ingots by the casting method. Each ingot was heated at 1250°C for 4 hours, then was hot forged to obtain a diameter 35 mm rod. The finishing temperature at the time of hot forging was 1000°C.

Each rod was normalized. The normalization temperature was 925°C, while the normalization time was 2 hours. After the normalization, the rod was allowed to cool down to room temperature (25°C).

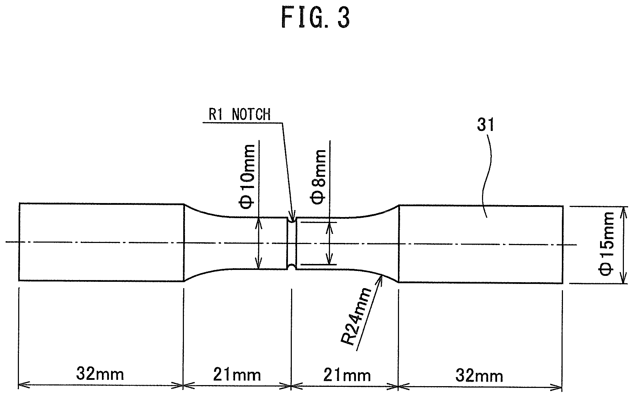

The cooled rod was machined to produce crude members for forming the wear test piece 21 shown in FIG. 2 and the rotating and bending fatigue test piece 31 shown in FIG. 3. The wear test piece 21 corresponding to the product member has a circular cross-section and is provided with a columnar test part 22 and a pair of columnar grip parts 23 arranged at the two ends of the test part 22. As shown in FIG. 2, the outside diameter of the test part 22 was 26 mm, the length of the test part 22 was 28 mm, and the total length of the wear test piece 21 was 130 mm. The bending fatigue test piece 31 had a circular cross-section and a notch of a radius of curvature of 1 mm at its center part. Further, after being allowed to cool, the rod was machined to produce a diameter 30 mm, length 300 mm rod-shaped machinability test piece (not shown).

The crude member of the wear test piece 21 and the machinability test piece were treated by induction hardening and tempering based on the conditions shown in Table 2. In Table 2, T1 is the tempering temperature (°C), while t1 is the tempering time (min). After tempering, the grip parts 23 were finished for the purpose of removing heat treatment strain.

Table 2

| Heat treatment conditions | Induction hardening | | Tempering | |
|---|---|---|---|---|
| | Frequency (kHz) | Heating time (s) | Ti (°C) | t1 (min) |
| a | 30 | 2.0 | 150 | 60 |
| b | 100 | 2.0 | 150 | 60 |
| c | 30 | 60.0 | 150 | 60 |
| d | 30 | 2.0 | 180 | 120 |
| *e | 30 | 2.0 | *100 | 60 |
| *f | 30 | 2.0 | *300 | 60 |
| *g | 30 | 2.0 | *- | *- |

The carburized members after induction hardening and tempering (crude members of wear test piece 21 and bending fatigue test piece 31 and above machinability test piece) were measured for volume fraction of retained austenite and observed and tested for structure by the following method before machining.

The hardened test part 22 of the wear test piece 21 and notch of the bending fatigue test piece 31 were machined under the conditions shown in Table 3 to obtain the wear test piece 21 and bending fatigue test piece 31 corresponding to the product member. However, for the bending fatigue test piece 31, the tool nose "r" was fixed at 0.4 mm. For the machining, a single pass was performed, that is, the depth of cut shown in Table 3 was applied just once.

Table 3

| Machining conditions | Rake angle $\alpha$ (°) | Nose radius "r" (mm) | Feed "f" (mm/rev) | Machining speed "v" (m/min) | Depth of cut "d" (mm) |
|---|---|---|---|---|---|
| $\alpha$ | -15 | 1.2 | 0.4 | 50 | 0.12 |
| $\beta$ | -25 | 1.2 | 0.4 | 100 | 0.08 |
| $\gamma$ | -20 | 1.2 | 0.4 | 150 | 0.1 |
| $\delta$ | -20 | 0.8 | 0.2 | 150 | 0.1 |
| *$\varepsilon$ | -20 | 1.2 | 0.4 | *200 | 0.1 |
| *$\zeta$ | *-35 | 1.2 | 0.4 | 150 | 0.1 |
| *$\eta$ | *5 | 1.2 | 0.4 | 150 | 0.1 |
| *$\theta$ | -20 | 1.2 | *0.1 | 150 | 0.1 |
| *$\iota$ | -20 | 1.2 | *0.5 | 150 | 0.1 |

(continued)

| Machining conditions | Rake angle α (°) | Nose radius "r" (mm) | Feed "f" (mm/rev) | Machining speed "v" (m/min) | Depth of cut "d" (mm) |
|---|---|---|---|---|---|
| *κ | -20 | 1.2 | 0.4 | 150 | *0.03 |
| *λ | -20 | 1.2 | 0.3 | 150 | *0.3 |

For the machining tool, a CBN sintered tool comprised of a sintered member mainly comprised of CBN particles and using ceramic as a binding material and provided on its surface with a TiAlN based ceramic coating was utilized.

Further, after the above machining, a wear test piece 21 and bending fatigue test piece 31 were prepared. The wear test piece 21 was polished by finish polishing using #2000 emery paper.

Measurement of Volume Fraction (RF) of Retained austenite

The surface of a test piece corresponding to the product member (wear test piece 21) was electrolytically polished. Specifically, the test piece surface was masked with a hole of a diameter of 3 mm and was electrolytically polished in an electrolytic solution containing 11.6% of ammonium chloride, 35.1% of glycerin, and 53.3% of water using the test piece as an anode and at a 20V voltage to expose the surface at a position 20 $\mu$m depth from the surface (below, referred to as the "observed surface").

The observed surface was analyzed by X-ray diffraction by the above-mentioned method and the volume fraction (RF(R2)) of retained austenite at a position 20 $\mu$m from the surface was found.

The observed surface was electrolytically polished by a similar method. The depth of the hole was made 10 $\mu$m deeper to 30 $\mu$m. The surface was analyzed by X-ray diffraction by the above method and the volume fraction of the retained austenite at a position 30 $\mu$m from the surface was found. This process is repeated to make the hole deeper in 10 $\mu$m increments. Each time, the volume fraction of retained austenite (RF(R2)) was measured. This was repeated until the depth of the hole reached 200 $\mu$m. Further, the maximum retained austenite volume fraction obtained among these was made R1.

Structure Observation Test (Measurement of Volume Fraction of Structures Other Than Retained austenite)

A test piece corresponding to the product member was measured for volume fraction of structures other than retained austenite by the following method:

Two Cylinder Wear Test (Measurement of RP Wear Amount)

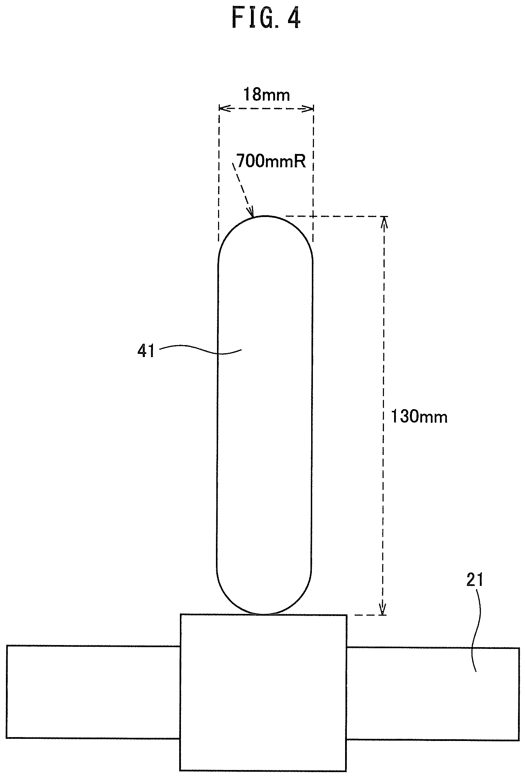

Using the wear test piece 21 shown in FIG. 2, the two cylinder wear test (RP test) shown in FIG. 4 was performed. FIG. 4 is a front view showing the RP test method. As shown in FIG. 4, in the RP test, a wear test piece 21 and a large roller test piece 41 were prepared. The large roller test piece 41 was disk shaped with a diameter of 130 mm, a size of the circumferential surface of 18 mm, and a crowning radius of curvature of the circumferential surface of 700 mm. The large roller test piece had a chemical composition corresponding to JIS standard SCM882 and was treated by carburizing and quenching. The circumferential surface of the large roller test piece 41 was made to contact the surface of the wear test piece 21 and the RP test was conducted under the conditions shown in Table 4.

Table 4

| | |
|---|---|
| Surface pressure | 1800 MPa |
| Speed | 1560 rpm |
| Lubrication oil | Automatic transmission fluid |
| Oil temperature | 90°C |
| Number of repetitions | $3 \times 10^6$ |

After the test, in the surface of the wear test piece 21, the part contacting the large roller test piece 41 was measured for depth of wear. For measurement of the depth of wear, a stylus type surface roughness meter was used. Using a measurement length of 26 mm, a stylus was run in the axial direction of the wear test piece 21 to obtain a cross-sectional curve. Each test piece was measured for cross-sectional curvature at four locations at 90° intervals in the circumferential direction. From each obtained cross-sectional curvature, the difference in height between a part not contacted by the large roller test piece 41 and a part contacted by the large roller test piece 41 and worn the most was measured. The average value of the differences in heights measured for the four locations was defined as the depth of wear of the wear test piece 21 of each test number (RP wear amount: unit: $\mu$m). In the present test, an RP wear amount of 10 $\mu$m or less is deemed passing in the sense of the test piece having an excellent bending fatigue strength compared with the prior art.

Rotating Bending Fatigue Test (Measurement of Bending Fatigue Strength)

The fatigue test piece 31 shown in FIG. 3 was used to conduct an Ono type rotating bending fatigue test while changing the test load by a pitch of 50 MPa so as to find the fatigue limit (bending fatigue strength). Note that, the midpoint between the minimum value ($\sigma_{f,min}$) of stress of breakage before reaching $10^7$ repetitions and the maximum stress ($\sigma_{r,max}$) at a nonbreaking point by stress lower than ($\sigma_{f,min}$) was made the fatigue limit. In this test, a fatigue limit (bending fatigue strength) of 650 MPa or more is deemed passing in the sense that of the test piece having an excellent bending fatigue strength compared with the prior art.

Measurement of Tool Wear (Measurement of Relief Face Wear Amount)

The tool wear of the machining tool was evaluated by the relief face wear amount ($\mu$m). The method is as follows. That is, the machinability test piece after carburizing and quenching and tempering (corresponding to carburized material) was machined by one pass per piece under the same machining conditions as the crude member shown in Table 3. A plurality of test pieces were repeatedly machined. After machining until a total machining time of 5 minutes, the extent of wear of the relief face of the machining tool was measured. To measure the extent of wear of the relief face, a microscope was used. The tool was set so that the tool relief face became parallel to the workpiece table and the worn part was examined under 200X magnification. The distance from the cutting edge of the part near the center of the worn part where the wear becomes maximum to the front end part of the wear was measured and used as the relief face wear amount. In this measurement, a relief face wear amount of 40 $\mu$m or less is deemed passing in the sense that it is possible to suppress tool wear at the time of machining compared with the prior art.

Test Results

The results relating to the tests explained above are shown in Table 5 and Table 6.

Table 5

| No. | Steel type | Heat treatment conditions | Machining conditions | Residual γ amount RI (%) | Residual γ amount RF-R2 (%) | Δγ (%) | R1 (%) | Δγρ | Plastic flow layer thickness (μm) | RP wear amount (μm) | Bending fatigue strength (MPa) | Relief face wear amount (μm) |
|---|---|---|---|---|---|---|---|---|---|---|---|---|
| 1 | A | a | γ | 16.4 | 8.7 | 46.8 | 16.5 | 46.8 | 6.5 | 3.9 | 775 | 30.9 |
| 2 | B | a | γ | 12.1 | 6.3 | 48.2 | 11.8 | 47.9 | 7.1 | 9.4 | 725 | 29.2 |
| 3 | C | a | γ | 15.6 | 8.7 | 44.0 | 15.4 | 44.0 | 5.7 | 1.4 | 825 | 36.1 |
| *4 | *D | a | γ | 9.2 | 5.2 | 49.0 | 9.2 | 43.5 | 10.7 | *41.3 | *525 | 26.3 |
| 5 | E | a | γ | 19.4 | 10.2 | 47.2 | 19.1 | 47.2 | 6.4 | 5.1 | 775 | 31.6 |
| *6 | *F | a | γ | 11.3 | 7.5 | 33.9 | 11.2 | *33.9 | 6.1 | *19.7 | *525 | 33.7 |
| *7 | *G | a | γ | *25.2 | *15.5 | *38.2 | *25.6 | *38.5 | 6.7 | *19.9 | *575 | 33.0 |
| *8 | *H | a | γ | *7.8 | 4.4 | 43.8 | *7.7 | 43.6 | 6.9 | *17.7 | *625 | 28.0 |
| 9 | *I | a | γ | 16.2 | 8.6 | 46.9 | 16.4 | 46.9 | 6.5 | 4.5 | 775 | *56.8 |
| 10 | J | a | γ | 18.9 | 10.5 | 44.2 | 18.7 | 44.2 | 6.6 | 5.3 | 725 | 31.6 |
| *11 | *K | a | γ | *25.7 | *16.3 | *36.5 | *26.0 | *36.6 | 6.8 | *18.4 | *625 | 33.3 |
| 12 | L | a | γ | 17.8 | 10.1 | 43.1 | 17.7 | 43.1 | 6.5 | 5.3 | 675 | 31.3 |
| 13 | M | a | γ | 17.3 | 9.8 | 43.2 | 17.3 | 43.2 | 6.4 | 5.5 | 725 | 31.1 |
| 14 | N | a | γ | 17.0 | 9.6 | 43.4 | 17.2 | 43.4 | 6.5 | 5.1 | 725 | 31.1 |
| 15 | O | a | γ | 16.7 | 8.9 | 46.7 | 16.6 | 46.7 | 6.5 | 3.6 | 775 | 36.0 |
| 16 | P | a | γ | 16.5 | 8.8 | 46.8 | 16.5 | 46.8 | 6.6 | 3.9 | 775 | 35.9 |
| *17 | *Q | a | γ | 16.2 | 8.6 | 46.9 | 16.3 | 46.9 | 6.5 | 4.3 | *625 | *50.6 |
| 18 | R | a | γ | 16.3 | 8.7 | 46.9 | 16.3 | 46.9 | 6.4 | 4.1 | 775 | 25.8 |
| 19 | A | b | γ | 15.8 | 8.4 | 47.0 | 15.9 | 47 | 6.7 | 3.6 | 775 | 30.7 |
| 20 | A | c | γ | 16.8 | 9.0 | 46.7 | 17.1 | 46.7 | 6.5 | 4.2 | 775 | 31.0 |
| 21 | A | d | γ | 16.0 | 8.5 | 46.9 | 16.1 | 46.9 | 7.1 | 3.7 | 725 | 30.8 |
| *22 | A | *e | γ | 16.7 | 10.6 | *36.7 | 16.6 | *36.7 | 5.2 | *15.7 | *575 | 31.0 |
| *23 | A | *f | γ | 13.2 | 8.8 | *33.1 | 13.1 | *33.1 | 7.8 | *19.0 | *525 | 29.5 |

(continued)

| No. | Steel type | Heat treatment conditions | Machining conditions | Residual $\gamma$ amount RI (%) | Residual $\gamma$ amount RF-R2 (%) | $\Delta\gamma$ (%) | R1 (%) | $\Delta\gamma\rho$ | Plastic flow layer thickness ($\mu$m) | RP wear amount ($\mu$m) | Bending fatigue strength (MPa) | Relief face wear amount ($\mu$m) |
|---|---|---|---|---|---|---|---|---|---|---|---|---|
| *24 | A | *g | $\gamma$ | 16.8 | 10.8 | *35.6 | 16.9 | *35.6 | 4.8 | *14.8 | *575 | 31.1 |
| 25 | A | a | $\alpha$ | 16.4 | 9.2 | 44.2 | 16.5 | 44.2 | 5.8 | 4.1 | 725 | 29.5 |
| 26 | A | a | $\beta$ | 16.4 | 8.7 | 47.2 | 16.5 | 47.2 | 5.9 | 3.9 | 825 | 31.8 |
| 27 | A | a | $\delta$ | 16.4 | 8.7 | 47.0 | 16.5 | 47.0 | 6.3 | 3.9 | 775 | 29.6 |
| *28 | A | a | *$\varepsilon$ | 16.4 | 8.7 | 46.8 | 16.5 | 46.8 | 8.5 | 3.9 | 675 | *51.7 |
| *29 | A | a | *$\zeta$ | 16.4 | 8.4 | 48.9 | 16.5 | 48.9 | *17.6 | 2.7 | 825 | *53.7 |
| *30 | A | a | *$\eta$ | 16.4 | 11.2 | *31.7 | 16.5 | *31.7 | 6.9 | *18.5 | *525 | *Breaks |
| *31 | A | a | *$\theta$ | 16.4 | 10.9 | *33.8 | 16.5 | *33.8 | 4.3 | *18.4 | *625 | 28.8 |
| *32 | A | a | *$\iota$ | 16.4 | 8.6 | 47.5 | 16.5 | 47.5 | 8.7 | 3.9 | 725 | *51.4 |
| *33 | A | a | *$\kappa$ | 16.4 | 11.7 | *28.6 | 16.5 | *28.6 | 2.6 | *21.5 | *625 | 19/5 |
| *34 | A | a | *$\lambda$ | 16.4 | 8.6 | 47.5 | 16.5 | 47.5 | 7.8 | 3.9 | 775 | *Breaks |
| *35 | A | a | *- | 16.4 | **16.4 | *0.0 | 16.5 | *0 | *0.0 | *33.3 | *475 | - |
| *36 | A | a | *Grinding | 16.4 | **13.1 | *19.9 | 16.5 | *20.1 | *0.6 | *28.2 | *525 | *- |

Table 6

| No. | Steel type | Heat treatment conditions | Machining conditions | γ amount RI (%) | Residual γ amount RF-R2 (%) | Δγ (%) | R1 (%) | Δγρ | Plastic flow layer thickness (μm) | RP wear amount (μm) | Bending fatigue strength (MPa) | Relief face wear amount (μm) |
|---|---|---|---|---|---|---|---|---|---|---|---|---|
| 37 | C | a | α | 15.6 | 8.9 | 43.0 | 15.4 | 43.0 | 5.6 | 1.5 | 725 | 35.2 |
| *38 | C | a | *η | 15.6 | 10.8 | *30.9 | 15.4 | *30.9 | 7.1 | *16.0 | *525 | *Breaks |
| *39 | C | b | *Grinding | 15.2 | *12.2 | *19.6 | 15.3 | *19.7 | *0.5 | *27.9 | *525 | - |
| *40 | C | d | *ι | 15.9 | 8.9 | 43.8 | 16.0 | 43.8 | 8.5 | 1.7 | 775 | *Breaks |
| *41 | C | *e | α | 15.9 | 10.5 | *33.8 | 15.7 | *33.8 | 4.9 | *18.8 | *575 | 36.4 |
| *42 | C | *f | δ | 13.1 | 8.9 | *31.9 | 13.0 | *31.9 | 7.9 | *17.1 | *525 | 29.9 |
| *43 | *D | a | α | 9.2 | 4.8 | 48.1 | 9.2 | 47.8 | 6.0 | *40.3 | *525 | 25.8 |
| *44 | *D | a | β | 9.2 | 4.5 | 50.8 | 9.2 | 51.1 | 6.2 | *39.1 | *575 | 27.8 |
| *45 | *D | b | δ | 9.0 | 4.6 | 50.1 | 9.1 | 48.9 | 5.8 | *39.8 | *525 | 26.5 |
| *46 | *F | a | α | 11.3 | 7.7 | *32.1 | 11.2 | *32.1 | 5.6 | *15.0 | *525 | 33.9 |
| *47 | *F | a | β | 11.3 | 7.3 | *35.8 | 11.2 | *35.8 | 6.0 | *16.2 | *626 | 34.3 |
| *48 | *F | d | 5 | 11.1 | 7.3 | *34.6 | 11.2 | *34.6 | 6.4 | *14.8 | *575 | 32.0 |
| *49 | *G | a | α | *25.2 | *15.9 | *36.8 | *25.6 | *36.9 | 6.5 | *19.1 | *575 | 31.5 |
| *50 | *G | a | β | *25.2 | *15.6 | *38.3 | *25.6 | *38.1 | 6.6 | *19.0 | *575 | 34.1 |
| *51 | *H | a | α | *7.8 | 4.5 | 42.2 | *7.7 | 42.3 | 5.7 | *17.8 | *625 | 28.0 |
| *52 | *H | a | β | *7.8 | 4.4 | 44.0 | *7.7 | 43.6 | 6.3 | *17.7 | *625 | 28.0 |
| *53 | *I | a | α | 16.2 | 8.8 | 45.9 | 16.4 | 45.9 | 5.5 | 4.5 | 775 | *54.3 |
| *54 | *I | d | β | 17.0 | 9.1 | 46.7 | 17.0 | 46.7 | 6.2 | 4.9 | 775 | *57.9 |
| 55 | J | a | α | 18.9 | 10.9 | 42.4 | 18.7 | 42.4 | 5.9 | 5.4 | 675 | 31.6 |
| 56 | J | d | β | 19.2 | 10.5 | 45.3 | 19.1 | 45.3 | 6.5 | 5.5 | 725 | 31.7 |
| *57 | J | *e | β | 19.3 | *12.7 | *34.1 | 19.4 | *34.2 | 5.8 | *17.6 | *625 | 32.4 |
| *58 | J | *g | δ | 19.5 | *12.5 | *36.1 | 19.5 | *35.9 | 5.3 | *16.7 | *575 | 31.9 |
| *59 | *K | a | α | *25.7 | *16.3 | *36.5 | *26 | *36.6 | 5.4 | *15.9 | *575 | 33.3 |

EP 3 336 206 A1

19

(continued)

| No. | Steel type | Heat treatment conditions | Machining conditions | γ amount RI (%) | Residual γ amount RF-R2 (%) | Δγ (%) | R1 (%) | Δγρ | Plastic flow layer thickness (μm) | RP wear amount (μm) | Bending fatigue strength (MPa) | Relief face wear amount (μm) |
|---|---|---|---|---|---|---|---|---|---|---|---|---|
| *60 | *K | c | β | *26.5 | *16.2 | *38.8 | *26.5 | *38.9 | 6.6 | *17.5 | *625 | 33.5 |
| 61 | O | a | α | 16.7 | 8.9 | 46.7 | 16.6 | 46.7 | 5.9 | 3.6 | 775 | 34.8 |
| *62 | O | a | *θ | 16.7 | 10.3 | *38.2 | 16.6 | *38.2 | 4.6 | *15.1 | *625 | 28.2 |
| *63 | O | a | *κ | 16.7 | 11.1 | *33.6 | 16.6 | *33.6 | 3.1 | *15.3 | *625 | 25.0 |
| *64 | O | *g | α | 17.2 | 10.9 | *36.5 | 17.3 | *36.5 | 5.7 | *14.2 | *575 | 36.3 |
| *65 | O | a | *Grinding | 16.7 | *13.3 | *20.5 | 16.6 | *20.4 | *0.6 | *29.8 | *525 | - |
| *66 | *S | a | α | 16.5 | 9.6 | 44.1 | 16.4 | 41.8 | 5.9 | 4.5 | *525 | *45.1 |

As clear from Table 5 and Table 6, Test Nos. 1 to 3, 5, 9, 10, 12 to 16, 18 to 21, 25 to 27, 37, 55, 56, and 61 satisfying the different conditions of the method for manufacturing a product member according to the present invention (that is, predicated on adjusting the chemical composition of a crude member, in particular making improvements to the structure of the hardened member after induction hardening and tempering and the structure of the product member after machining) give good results for both of the structure of the hardened member and structure of the product member. Therefore, it was proved that a product member excellent in wear resistance, bending fatigue strength, and machinability can be obtained according to the method for manufacture of these test examples.

As opposed to this, as clear from Table 5 and Table 6, it is learned that Test Nos. 4, 6 to 8, 11, 17, 22 to 24, 28 to 36, 38 to 54, 57 to 60, and 62 to 66 not satisfying the conditions of the method for manufacturing a product member according to the present invention (that is, not adjusting the chemical composition of the crude member and not improving at least one of the structure of the hardened member after induction hardening and tempering and the structure of the product member after machining) do not give good results in at least one of the structure of the hardened member and structure of the product member. Therefore, it cannot be said that a product member excellent in wear resistance, bending fatigue strength, and machinability can be obtained according to the methods of manufacture of these test examples.

REFERENCE SIGNS LIST

11. plastic flow structure
12. center part
21. wear test piece
22. test part
23. grip part
31. bending fatigue test piece
41. large roller

**Claims**

1. A method for manufacturing a product member comprising:

   a step of working a steel material having a chemical composition containing C: 0.4 to 0.7%, Si: 0.25% or less, Mn: 0.5 to 2.6%, P: 0.050% or less, S: 0.005 to 0.020%, Al: 0.010 to 0.050%, N: 0.005 to 0.025%, and O: 0.003% or less, having a balance of Fe and unavoidable impurities, and satisfying formula (3) to obtain a crude member,
   a step of induction hardening and tempering said crude member to obtain a hardened member, in which step, a frequency at the time of induction heating is made 10 kHz to 300 kHz, a heating time at the time of induction heating is made 1 second to 60 seconds, a tempering temperature is made 160°C to 200°C, and a tempering time is made 60 minutes to 180 minutes and,
   in said hardened member, a structure at a reference position corresponding to a position of 20 $\mu$m depth from a position corresponding to the surface of the final form of the product member becomes a structure containing martensite and a volume fraction of 8 to 20% of retained austenite, and
   a step of machining said hardened member to obtain a product member, in which step, in which step, a rake angle of a machining tool is made over -30° to -5°, a nose radius of the tool is made 0.4 mm to 1.2 mm, a feed is made over 0.1 mm/rev to 0.4 mm/rev, a machining speed is made 50 m/min to 150 m/min, and a depth of cut is made 0.05 mm to 0.2 mm and,
   in said structure at a reference position, a retained austenite volume fraction becomes 12% or less, and a rate of decrease of retained austenite $\Delta\gamma$ found by formula (a) from a retained austenite volume fraction (RI) before machining and retained austenite volume fraction (RF) after machining becomes 40% or more:

$$17.0 \leq 25.9C + 6.35Mn \leq 27.2 \ (1)$$

   where, for the element symbols in formula (1), the contents (mass%) of the elements are entered.

$$\Delta\gamma = (RI\text{-}RF)/RI \times 100 \ (A)$$

2. The method for manufacturing a product member according to claim 1, wherein said steel material contains, in place of part of the Fe, Pb: 0.5% or less.

3. The method for manufacturing a product member according to claim 1 or 2, wherein said steel material contains, in place of part of the Fe, one or more elements selected from the group comprising V and Ti in a total content of 0.1% or less.

4. The method for manufacturing a product member according to any one of claims 1 to 3, wherein said steel material contains, in place of part of the Fe, one or more elements selected from the group comprising Cr: 3.0% or less, Mo: 3.0% or less, and Ni: 3.0% or less and satisfies formula (2), instead of formula (1):

$$17.0 \leq 25.9C + 6.35Mn + 2.88Cr + 3.09Mo + 2.73Ni \leq 27.2 \ (2)$$

where, for the element symbols in formula (2), the contents (mass%) of the elements are entered.

5. The method for manufacturing a product member according to any one of claims 1 to 4, further comprising using a CBN tool for machining.

6. A product member having a chemical composition containing, by mass%, C: 0.4 to 0.7%, Si: 0.25% or less, Mn: 0.5 to 2.6%, P: 0.050% or less, S: 0.005 to 0.020%, Al: 0.010 to 0.050%, N: 0.005 to 0.025%, and O: 0.003% or less, having a balance of Fe and unavoidable impurities, and satisfying formula (3), wherein
a structure at a position of 20 $\mu$m depth from the surface has a total of martensite and retained austenite of 97% or more,
a maximum retained austenite volume fraction (R1) in the range from the surface to 200 $\mu$m depth is 8 to 20%,
a predicted rate of decrease of retained austenite $\Delta\gamma$p found by formula (B) from a retained austenite volume fraction (R2) at a position of 20 $\mu$m depth from the surface and said maximum retained austenite volume fraction (R1) is 40% or more, and
the surface has a thickness 1 to 15 $\mu$m plastic flow structure:

$$17.0 \leq 25.9C + 6.35Mn \leq 27.2 \ (3)$$

where, for the element symbols in formula (3), the contents (mass%) of the elements are entered.

$$\Delta\gamma p = (R1-R2)/R1 \times 100 \ (B)$$

7. The product member according to claim 6, which contains, in place of part of the Fe, Pb: 0.5% or less.

8. The product member according to claim 6 or 7, which contains, in place of part of the Fe, at least one element selected from the group comprised of V and Ti in a total content of 0.1% or less.

9. The product member according to any one of claims 6 to 8, which contains, in place of part of the Fe, at least one element selected from the group comprised of Cr: 3.0% or less, Mo: 3.0% or less, and Ni: 3.0% or less and which satisfies formula (4) instead of formula (3):

$$17.0 \leq 25.9C + 6.35Mn + 2.88Cr + 3.09Mo + 2.73Ni \leq 27.2 \ (4)$$

where, for the element symbols in formula (4), the contents (mass%) of the elements are entered.

10. The product member according to any one of claims 6 to 9, which is obtained by induction hardening, tempering, and machining the steel material.

FIG. 1

FIG. 2

# FIG. 3

R1 NOTCH

Φ10mm

Φ8mm

31

Φ15mm

R24mm

| 32mm | 21mm | 21mm | 32mm |

# FIG. 4

18mm

700mmR

41

130mm

21

### INTERNATIONAL SEARCH REPORT

International application No.

PCT/JP2016/072426

#### A. CLASSIFICATION OF SUBJECT MATTER
*C21D9/00*(2006.01)i, *B23P13/00*(2006.01)i, *C21D1/10*(2006.01)i, *C22C38/00* (2006.01)i, *C22C38/06*(2006.01)i, *C22C38/60*(2006.01)i

According to International Patent Classification (IPC) or to both national classification and IPC

#### B. FIELDS SEARCHED

Minimum documentation searched (classification system followed by classification symbols)
C21D9/00, B23P13/00, C21D1/10, C22C38/00-C22C38/60

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

#### C. DOCUMENTS CONSIDERED TO BE RELEVANT

| Category* | Citation of document, with indication, where appropriate, of the relevant passages | Relevant to claim No. |
|---|---|---|
| A | JP 2009-197314 A  (JFE Steel Corp.), 03 September 2009 (03.09.2009), claims; paragraph [0015] (Family: none) | 1-10 |
| A | JP 2009-185321 A  (Aichi Steel Works Ltd., Nippon Steel Corp., Toyota Motor Corp.), 20 August 2009 (20.08.2009), claims; paragraph [0021] (Family: none) | 1-10 |

☐   Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 October 2016 (20.10.16) | 01 November 2016 (01.11.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3120313 A
- JP 8260125 A
- JP 2007210070 A